# EUROPEAN PATENT SPECIFICATION

(11) **EP 4 225 550 B1**
(45) Date of publication and mention of the grant of the patent: **26.02.2025**
(21) Application number: 21791462.1
(22) Date of filing: 27.09.2021
(51) Int. Cl.: B29C 44/04, B60N 2/70, B29K 75/00, B29L 31/58, B29L 31/00

(54) **SEAT FOR VEHICLE**
SITZ FÜR FAHRZEUG
SIÈGE POUR VÉHICULE

(30) Priority: 06.10.2020 IT 202000023542
(43) Date of publication of application: 16.08.2023
(73) Proprietor: Toscana Gomma S.p.A., 27038 Robbio (IT)
(72) Inventor: GILARDI, Massimo, 27038 Robbio (Pavia) (IT); GRASSINI, Stefano, 27038 Robbio (Pavia) (IT)
(74) Representative: Lunati & Mazzoni S.r.L.
(86) International application number: PCT/IB2021/058770
(87) International publication number: WO 2022/074500

(56) References cited:
- EP-A1- 2 185 617
- EP-A1- 2 185 617
- WO-A1-03/046041
- WO-A1-03/046041
- FR-A1- 2 841 507
- FR-A1- 2 841 507
- FR-A1- 2 841 508
- FR-A1- 2 841 508
- US-A1- 2015 307 647
- US-A1- 2015 307 647
- US-A1- 2016 318 428
- US-A1- 2016 318 428
- US-A1- 2017 327 620
- US-A1- 2017 327 620

## Description

The present invention relates to a seat for a vehicle and a method for the production of the same of the type specified in the preamble of the independent claims.

Similar seats are described in patent applications US2015/307647A1, US 2017/327 620A1, EP2185617A1, WO03/046041A1, FR2841507A1, FR2841508A1 e US2016/ 318428A1.

Vehicle seats are currently known, and materials used in the production of the backrest or headrest padding are also known, said materials are suitable for providing the same seat with certain physical-mechanical characteristics in order to ensure comfort and safety during the use of the vehicle.

Among the characteristics mainly sought after by a seat are the breathability to air, connected with the ability of the padding to dispose of the heat caused by a user.

In the known art several materials are usually used to achieve these technical characteristics, said materials coupled for example by gluing.

For these purposes, for example, the use of natural or synthetic polymeric materials such as latexes, foams and shape memory foams are known in order to obtain seats with desirable characteristics.

The known technique described comprises some important drawbacks.

In particular, shape memory foams such as polyurethane, due to the same structure that guarantees their mechanical properties, retain a lot of heat due to the poor breathability of the structure, thus making them uncomfortable for a user.

Also, especially the shape memory foams, show a strong variability of some important mechanical properties with the temperature, compromising the comfort and safety of the user as the temperature of use varies.

In addition, with regard to the production method of seats composed of several materials, the use of glues for the union of different components has a serious
environmental impact and the gluing worsens the air permeability characteristics of the seat.

In this situation, the technical task underlying the present invention is to devise a seat for a vehicle and a method for production of the same capable of substantially obviating at least part of the aforementioned drawbacks.

Another important object of the invention is to provide a seat which allows high breathability of the materials that compose it.

Another object of the present invention is to provide a seat whose materials have stable mechanical characteristics in a defined temperature range.

Within the scope of said technical task, it is an important object of the invention to obtain a method which allows to use a single moulding phase to obtain the seat according to the present invention.

Finally, within the scope of said technical task, it is an important object of the invention to obtain a method that does not provide for gluing the components that make up the padding of said seat.

The technical task and the specified aims are achieved by a seat for vehicle and a method for the production of the same as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:
Fig. **1** shows an exemplary embodiment of the seat of a vehicle according to the present invention;
Fig. **2** shows a block diagram schematizing a method not according to the present invention; and
Fig. **3** shows a further alternative phase of a method not according to the present invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975). With reference to the Figures, the seat for vehicle according to the invention is globally indicated with the number **1.**

It comprises two components **2,** comprising a backrest **2a** and a cushion **2b** or seating.

Each of said components comprises an external portion **3,** or rather a portion close to the external surface **4a** with which the user comes into contact. The external portion 3 therefore determines a large part of the sensation of support that the user sitting on the seat 1 has. The external portion 3, preferably, does not comprise the external surface 4a, which is instead part of a suitable covering layer **4,** but is more preferably immediately below the same covering layer 4.

Preferably, at least one of said components 2, and more preferably the backrest 2a, comprises an external portion 3 comprising viscoelastic foam of the pneumatic type. Foam is here intended as a solid material, having the characteristic of acquiring, once produced, an amorphous macro-structure cross-linked to cells containing air. The viscoelastic pneumatic foam, known per se, also known as "shape memory - memory foam" or "slow-memory" or "slow-recovery foam" or "low resilience foam", is a material that recovers deformations in time relatively long (for example one or more seconds).

It is pneumatic because, as is known, its characteristics of viscoelasticity, or shape memory, are mainly conferred by the structure characterized by cells which in the compression phase expel the contained air through micro-holes and, in the viscoelastic return phase, they recall the air very slowly precisely because of the small size of said holes.

With reference to the materials used in the production of said outer portion 3 according to the present invention, the preferred formulations for viscoelastic foams will be described.

The viscoelastic foam is a flexible thermosetting polyurethane foam made with reagents comprising at least one polyol and a compound comprising isocyanate functional groups.

Preferably, according to the present invention, the reagents for the preparation of said viscoelastic foam comprise polyoxyethylene and polyoxypropylene.

Specifically, preferably, the reagents for the preparation of said viscoelastic foam comprise polyoxyethylene and/or polyoxypropylene polyols with functionality ranging from 2 to 6, or also polyesters and/or hybrids and/or mixtures of said substances.

Again, preferably, the reagents for the preparation of said viscoelastic foam comprise polyoxyethylene and/or polyoxypropylene polyols and at least one compound comprising isocyanate functional groups.

Preferentially furthermore, the viscoelastic foam is a flexible thermosetting polyurethane foam polymer obtained starting from a mixture of polyols, polyethers and/or polyesters and at least one isocyanate compound with a percentage by weight of NCO components comprised between 25% and 48%.

Examples of preferred formulations for the realization of said viscoelastic foam are shown in the table below:

| **Component (commercial example)** | **Formula tion 1** | **Formula tion 2** | **Formula tion 3** |
|---|---|---|---|
| FORMULATED POLYOL | | | |
| Polyoxyethylene-polyoxypropylene polyol having a nominal hydroxyl functionality of 3 and an OH number in a range from 35 to 39 mg KOH/g | 80 | 75 | |
| Polyoxypropylene polyol having a nominal hydroxyl functionality of 3 and an OH number in a range from 54 to 57 mg KOH/g | 20 | | |
| Polyoxyethylene-polyoxypropylene polyol having a nominal hydroxyl functionality of 3 and an OH number in a range from 45 to 51 mg KOH/g | | 25 | |
| Polyester polyol having an OH number in a range from 50 to 60 mg KOH/g | | | 79 |
| Polyether polyol having a nominal hydroxyl functionality of 3 and OH number in a range from 54 to 58 mg KOH/g | | | 21 |
| Additives | | | 0.9 |
| Amine based catalyst | 0.85 | 0.26 | 0.5 |
| Metal based catalyst | | 0.09 | 0.1 |
| Surface-active substance (surfactant) such as emulsifier and foam stabilizer | 2.85 | 1.2 | 2.1 |
| Water | 2.6 | 3.85 | 3.8 |
| ISOCYANATE | | | |
| Mixture of 4,4'-, 2,4'-, 2,2'-diphenylmethane diisocyanate, oligomeric diphenylmethane diisocyanate and/or polyphenylpolymethylene | 45.841 | | |
| polyisocyanate having an NCO content of 32 to 33 wt % | | | |
| Mixture of 2,4- and 2,6-tolylene diisocyanate having an NCO content of approx. 48 wt % | | 43.53 | 42.966 |

As can be seen, both the specific formulations specified above are viscoelastic foams having the chemical and compositional characteristics described up to now, therefore identifiable as flexible thermosetting polyurethane viscoelastic foams according to the present invention.

Specifically, and in the following of this document, reference will be made to formulation 1 as a viscoelastic foam while formulation 2 and formulation 3 as a viscoelastic foam with elastic behaviour.

Furthermore, tests carried out on the variation of certain physical-mechanical properties as the temperature of the viscoelastic foam specimens obtained with the formulations described here will be presented.

The thickness of the viscoelastic foam in the tested size is 50 mm.

In the tests described here, the test temperatures indicated are obtained by placing the specimen in a climatic chamber for 12 hours before the test at room temperature.

The compression load deflection tests were carried out with a dynamometer equipped with a circular measuring plate with a diameter of 202 mm and with a compression and release speed of 100 mm/min.

The compression load deflection data is measured after 10 seconds of applying the deformation by measuring the value of the reaction force.

Finally, the reference value will mean the value of the specific property and/or characteristic measured with the specimen at a temperature of 23 °C.

The variation in compression load deflection of said viscoelastic foam, calculated in a deformation cycle from 0% to 65% induced by a state of compressive stresses, does not exceed 0.7 kPa, more preferably 0.5 kPa, when measured in a temperature range between -10 °C and + 40 °C.

Still, preferably, the compression load deflection variation of said viscoelastic foam, calculated in a deformation cycle from 0% to 65% induced by a state of compressive stresses, does not exceed 30% of the reference value, when measured in a range of temperature between -10 ° C and + 40 ° C.

In addition, preferably, the compression load deflection value of said viscoelastic foam, measured at 65% of deformation induced by a state of compressive stresses, is between 0.5 kPa and 5 kPa, when measured in a temperature range between - 10 ° C and + 40 ° C.

Furthermore, the data relating to the "ball rebound resilience test" are presented, using a method for determining the elastic yield of continuous sheets of flexible polyurethane foam, for example carried out according to the UNI 6357-68 standard; said elastic yield will be expressed here as the% rebound value on said specimen and as% resilience value.

The test in question was carried out entirely in a climatic chamber.

In fact, preferably, the % rebound value on said viscoelastic foam is between 0% and 20% measured at 23°C. Moreover, preferably said value measured in a temperature range between -10 °C and 40 °C varies by less than 11 percentage points. Again, preferably, the% rebound value on said viscoelastic foam, measured in a temperature range between -10 °C and 40 °C, varies in a range between 5% and 16%.

In addition, preferably, the% rebound value on said viscoelastic foam with elastic behaviour is comprised between 20% and 70% measured at 23 °C. Moreover, preferably said value measured in a temperature range between -10 °C and 40 °C varies by less than 13 percentage points. Again, preferably, the% rebound value on said viscoelastic foam with elastic behaviour, measured in a temperature range between -10 ° C and 40 ° C, varies in a range between 30% and 43%.

Preferably again, the% resilience of said viscoelastic foam is between 5% and 40% measured at 23 °C. Moreover, preferably said value, measured in a temperature range between -10 °C and 40 °C varies less than 10 percentage points. Preferably again, the% resilience on said viscoelastic foam, measured in a temperature range between -10 °C and 40 °C, varies in a range between 7% and 17%.

Preferably again, the% resilience of said viscoelastic foam with elastic behaviour is between 40% and 80% measured at 23 °C. Furthermore, preferably, the% resilience on said viscoelastic foam with elastic behaviour, measured in a temperature range between -10 °C and 40 °C varies less than 7 percentage points. Preferably, moreover, the% resilience on said viscoelastic foam with elastic behaviour, measured in a temperature range between -10 °C and 40 °C, varies in a range between 52% and 59%.

Again, preferably, according to the present invention, the breathability of said viscoelastic foam is lower than 100 (1 dm²)/min.

Preferably, according to the present invention, the breathability of said viscoelastic foam with elastic behaviour is higher than 100 (I dm²)/min.

Said breathability is calculated on a sample with a thickness of 20 mm in the tested direction, according to ISO 9237 - 200 Pa.

Finally, preferably, the density of said viscoelastic foam varies in a range between 25 g/dm³ and 90 g/dm³.

In addition, preferably, the density of said viscoelastic foam with elastic behaviour varies in a range comprised between 18 g/dm³ and 40 g/dm³.

The preferred embodiments of the viscoelastic foam have therefore been described in order to obtain the viscoelastic foam of said external portion 3 according to the present invention.

More preferably, the component 2 of the seat 1 also comprises an elastic portion 5, or rather with characteristics of rapid elastic return following mechanical deformations.

Said elastic portion 5 is preferably composed of an HR (High Resilience) polymer or in general of a polymeric material suitable for the purpose.

The external portion 3, preferably made with one of the viscoelastic foams previously described in this document, is preferably made with the method described below.

In a first example, the method, not part of the claimed invention, preferably comprises a co-moulding phase.

Co-moulding is a moulding process in which portions in different materials are made in the same mould in successive stages, so that the finished product, made by joining said portions, at the moment of extraction from the mould includes the two said portions already mutually bound and does not require further connection phases.

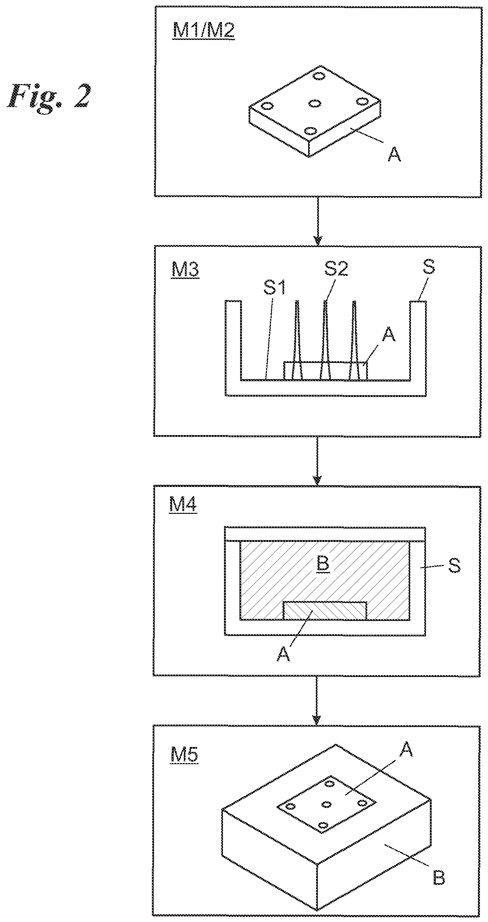

The method preferably comprises a production phase M1 of a foam A, as shown in Fig.2.

The production phase of said foam A can take place with a plurality of production technologies, such as for example moulding and even more.

Preferably, the foam A is a foam chosen between a viscoelastic foam and an elastic foam.

In this text, a viscoelastic foam will be identified as a foam having time-dependent stress-deformation characteristics, such as a "memory foam" foam or in general a foam that recovers deformations in a relatively long time (for example one or more seconds). By elastic foam, on the other hand, we mean a foam that recovers almost instantaneously the deformations induced by a state of applied stress. Preferred examples of viscoelastic foams according to the present invention are those of the formulations 1 and 2 previously described, and therefore preferably viscoelastic foams and viscoelastic foams with elastic behaviour. Examples of elastic foams are HR polymers or in general polymeric materials suitable for the purpose.

In addition, preferably the method comprises a drilling phase **M2** said foam **A.**

Preferably, the drilling phase **2** provides for obtaining through holes along at least one dimension of the foam **A** produced. The drilling can be carried out during moulding with moulds of suitable shapes or after the production of foam A with further processing. The section of the holes is of arbitrary shape.

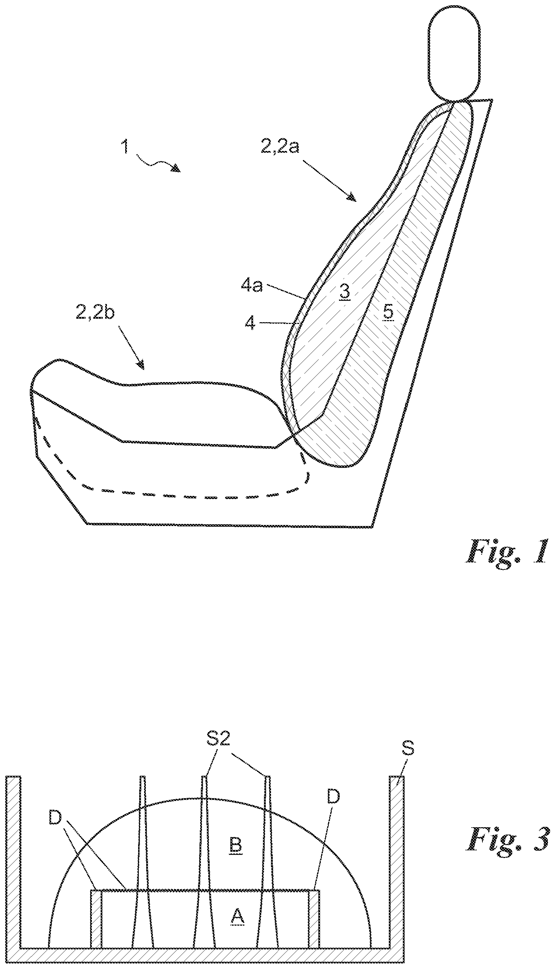

In a preferred embodiment, it said method further comprises a step of positioning **M11,** depicted in Fig.3, of at least one barrier element **D** inside said mould **S.**

Said barrier element **D** can be positioned both perpendicularly and horizontally with respect to said surface **S1** of said mould.

Again, preferably the at least one barrier element D is an impermeable barrier element.

Finally, alternatively or in combination with a waterproof barrier element D, the at least one barrier element D is a perforated barrier element.

Again, preferably the method comprises a connection phase **M3** of said foam A on a surface S1 of a mould S.

Preferably said mould S is shaped with columns **S2.**

Even more preferably said surface S1 is shaped with columns S2.

In the connection phase 3 of said foam A on said surface S1, said columns S2 are placed in correspondence with holes obtained by the perforation 2 of said foam A. Again, preferably the method comprises a casting phase M4 of a further foam B in said mould S.

Preferably according to the present method said foam B is a foam chosen from a viscoelastic foam and an elastic foam.

In a preferred embodiment of the method said foam A is a viscoelastic foam and said foam B is an elastic foam.

Again, in an alternative embodiment to the one described above, said foam A is an elastic foam and said foam B is a viscoelastic foam.

Still preferably, the method comprises an extraction phase M5 for said padding I from said mould S.

The seat 1 can also be produced by gluing and assembling or sewing the various portions of the seat 1 described.

The present invention relates to a seat 1 of a vehicle preferably produced according to the method described here.

The operation and the advantages of the method of manufacturing a vehicle seat are as follows.

Advantageously, the formulation and production of the viscoelastic foam described here allows to obtain a contact surface between the user and the seat that is highly breathable thanks to the characteristics of the foam itself and/or its perforation during the production phase.

Furthermore, the characteristics of high hygroscopicity of the viscoelastic foam allow the absorption of high levels of humidity and/or liquids, making the area in contact with a user dry and comfortable.

Furthermore, advantageously, the formulation of the viscoelastic foam allows to maintain mechanical characteristics, such as for example compression load deflection and resilience, constant in a wide range of temperatures without affecting the breathability of the viscoelastic foam; in this way the comfort and safety of the user are not compromised when the environmental and/or conditioning conditions of the vehicle vary.

Advantageously, moreover, co-moulding allows the production of components for seats with the desired characteristics without having to resort to polluting glues and which also require further cutting and coupling steps to arrive at the finished product.

Co-moulding allows to produce finished seat paddings when they are extracted from the mould, resulting in advantages in terms of processing time and therefore economic.

The invention is susceptible of variants falling within the scope of the inventive concept defined by the claims.

## Claims

1. Seat (1) for vehicle, comprising at least one component (2) comprising at least an external part (3) facing towards a user, wherein said external portion (3) comprises a viscoelastic foam, and said viscoelastic foam is a flexible thermosetting polyurethane foam made with reagents comprising at least one polyol and a compound comprising isocyanate functional groups and
**characterized in that** the variation of compression load deflection of said viscoelastic foam, measured after 10 seconds of applying the deformation by measuring the value of the reaction force with a dynamometer equipped with a circular measuring plate with a diameter of 202 mm and with a compression and release speed of 100 mm/min and calculated in a cycle of deformations from 0% to 65% induced by a state of compressive stresses, does not exceed 0,7 kPa, when measured in a temperature range between -10 °C and + 40 °C.

2. Seat according to claim 1, wherein the reagents for the preparation of the said viscoelastic foam comprise polyoxyethylene and/or polyoxypropylene polyols having a functionality comprised between 2 and 6.

3. Seat according to any of the preceding claims, wherein the reagents for the preparation of the said viscoelastic foam comprise polyols, polyethers and or polyesters and at least one isocyanate compound having a percentage by weight of NCO components comprised between 25% and 48%.

4. Seat according to any of the preceding claims, wherein the compression load deflection of the said viscoelastic foam, measured at 65% of deformation induced by a state of compressive stresses, is between 0.5 kPa and 5kPa, when measured in a temperature range between -10 °C and +40 °C.

5. Seat according to any of the preceding claims, wherein the rebound value % on said viscoelastic foam, is comprised between 0% and 20% measured at 23°C.

6. Seat according to any of the preceding claims, wherein the resilience value % of said viscoelastic foam is comprised between 5% and 40% measured at 23 ° C.

7. Seat according to any of the preceding claims, wherein said viscoelastic foam is of pneumatic type.

8. Seat according to any of the preceding claims, wherein the density of said viscoelastic foam varies in a range of between 25 g/dm³ and 90 g/dm³.

## Patentansprüche

1. Sitz (1) für ein Fahrzeug, umfassend mindestens eine Komponente (2) umfassend mindestens einen Außenteil (3), der einem Benutzer zugewandt ist, wobei dieser Außenabschnitt (3) einen viskoelastischen Schaum umfasst, und wobei der viskoelastische Schaum ein flexibler, wärmehärtender Polyurethanschaum ist, der mit Reaktionsmitteln hergestellt wird, die mindestens ein Polyol und eine Verbindung mit Isocyanat-funktionellen Gruppen enthalten und **dadurch gekennzeichnet, dass** die Änderung der Verformung bei Druckbelastung dieses viskoelastischen Schaums, die nach 10 Sekunden durch Anwenden der Verformung durch Messen des Reaktionskraftwertes mit einem Dynamometer, das mit einer kreisförmigen Messplatte mit einem Durchmesser von 202 mm ausgestattet ist und das mit einer Kompressions- und Entlastungsgeschwindigkeit von 100 mm/min arbeitet, gemessen wird und die in einem Verformungszyklus von 0 % bis 65 % berechnet wird, der durch einen Zustand von Druckspannungen induziert wird, 0,7 kPa nicht überschreitet, wenn sie in einem Temperaturbereich zwischen -10 °C und +40 °C gemessen wird.

2. Sitz nach Anspruch 1, wobei die Reaktionsmittel zur Vorbereitung des viskoelastischen Schaums Polyoxyethylen- und/oder Polyoxypropylen-Polyole aufweisend eine Funktionalität zwischen 2 und 6 enthalten.

3. Sitz nach einem der vorhergehenden Ansprüche, wobei die Reaktionsmittel zur Vorbereitung des viskoelastischen Schaums Polyole, Polyether und/oder Polyester und mindestens eine Isocyanatverbindung aufweisend einen Gewichtsanteil an NCO-Komponenten zwischen 25% und 48% enthalten.

4. Sitz nach einem der vorhergehenden Ansprüche, wobei die Verformung bei Druckbelastung des viskoelastischen Schaums, die bei 65 % der Verformung gemessen wird, die durch einen Zustand von Druckspannungen induziert wird, zwischen 0,5 kPa und 5 kPa liegt, wenn sie in einem Temperaturbereich zwischen -10 °C und +40 °C gemessen wird.

5. Sitz nach einem der vorhergehenden Ansprüche, wobei der Rückprallwert (%) des viskoelastischen Schaums zwischen 0 % und 20 % liegt, wenn er bei 23 °C gemessen wird.

6. Sitz nach einem der vorhergehenden Ansprüche, wobei der Kerbschlagzähigkeitswert (%) des viskoelastischen Schaums zwischen 5 % und 40 % liegt, wenn er bei 23 °C gemessen wird.

7. Sitz nach einem der vorhergehenden Ansprüche, wobei der viskoelastische Schaum vom pneumatischen Typ ist.

8. Sitz nach einem der vorhergehenden Ansprüche, wobei die Dichte des viskoelastischen Schaums in einem Bereich zwischen 25 g/dm³ und 90 g/dm³ ändert.

## Revendications

1. Siège (1) pour véhicule, comprenant au moins un composant (2) comprenant au moins une partie externe (3) orientée vers un utilisateur, dans lequel ladite partie externe (3) comprend une mousse viscoélastique et ladite mousse viscoélastique est une mousse de polyuréthane thermodurcissable flexible réalisée avec des réactifs comprenant au moins un polyol et un composé comprenant des groupes fonctionnels isocyanates
**caractérisé en ce que** la variation de la déflexion de la charge de compression de ladite mousse viscoélastique, mesurée après 10 secondes d'application de la déformation en mesurant la valeur de la force de réaction avec un dynamomètre équipé d'une plaque de mesure circulaire d'un diamètre de 202 mm et avec une vitesse de compression et de relâchement de 100 mm/min, et calculée dans un cycle de déformations de 0% à 65% induit par un état de contraintes de compression, ne dépasse pas 0,7 kPa lorsqu'elle est mesurée dans une plage de température comprise entre -10 °C et +40 °C.

2. Siège selon la revendication 1, dans lequel les réactifs pour la préparation de ladite mousse viscoélastique comprennent des polyols polyoxyéthylène et/ou polyoxypropylène ayant une fonctionnalité comprise entre 2 et 6.

3. Siège selon l'une quelconque des revendications précédentes, dans lequel les réactifs pour la préparation de ladite mousse viscoélastique comprennent des polyols, des polyéthers et/ou des polyesters et au moins un composé isocyanate ayant un pourcentage en poids de composants NCO compris entre 25% et 48%.

4. Siège selon l'une quelconque des revendications précédentes, dans lequel la déflexion de la charge de compression de ladite mousse viscoélastique, mesurée à 65 % de déformation induite par un état de contraintes de compression, est comprise entre 0,5 kPa et 5 kPa lorsqu'elle est mesurée dans une plage de température comprise entre -10 °C et +40 °C.

5. Siège selon l'une quelconque des revendications précédentes, dans lequel la valeur de rebond (%) de ladite mousse viscoélastique est comprise entre 0 % et 20 %, mesurée à 23 °C.

6. Siège selon l'une quelconque des revendications précédentes, dans lequel la valeur de résilience (%) de ladite mousse viscoélastique est comprise entre 5 % et 40 %, mesurée à 23 °C.

7. Siège selon l'une quelconque des revendications précédentes, dans lequel ladite mousse viscoélastique est de type pneumatique.

8. Siège selon l'une quelconque des revendications précédentes, dans lequel la densité de ladite mousse viscoélastique varie dans une plage comprise entre 25 g/dm³ et 90 g/dm³.
